# EUROPEAN PATENT APPLICATION

(11) **EP 4 723 448 A1**
(43) Date of publication of application: **08.04.2026**
(21) Application number: 24814675.5
(22) Date of filing: 28.05.2024
(51) Int. Cl.: H02K 21/24, H02K 1/2793

(54) **MAGNETIC AXIAL FLUX MOTOR COMPRISING PERMANENT MAGNETS**

(30) Priority: 01.06.2023 ES 202330443
(71) Applicant: Iredheat Solutions S.L., 28694 Madrid (ES)
(72) Inventor: JASKIEWICZ, Witold, 28694 Madrid (ES)
(74) Representative: Ibarra Garcia, Isabel
(86) International application number: PCT/ES2024/070324
(87) International publication number: WO 2024/246394

(57) **Abstract**

The present invention relates to an axial flux motor built with paramagnetic materials, the rotor and stator of which are made up of respective discs carrying opposing permanent magnets with opposite polarities and with a certain inclination that generates a tangential repulsion force component that causes the angular movement of the rotor. The motor has the particular feature of including adjustment means for adjusting the relative position between the two discs that form the rotor and stator, such that it is possible to control the starting and stopping of the motor, as well as the different revolution rates offered by the same.

## Description

### FIELD OF THE ART

The present invention relates to a motor built with paramagnetic materials, the stator of which is made up of a specific number of permanent magnets placed such that all of them have polarity oriented in the same direction and the rotor of which also has a number of magnets with the same orientation equal to or different from the stator, with the rotor and the stator being in magnetic repulsion, forming with said configuration an autonomous motor which does not use any type of external power source for its operation.

The object of the invention is to provide a magnetic axial flux motor which, in addition to not using any type of external power source for its operation, includes means which allow adjusting the starting, speed, and stopping thereof without requiring auxiliary sources.

### BACKGROUND OF THE INVENTION

Despite the known countless attempts to create motors based on permanent magnets established in both the rotor and the stator, based on the magnetic repulsion force that they exert on one another as a result of a suitable arrangement, distribution, and orientation, the reality is that motors of this type did not catch on, and one of the fundamental reasons is the non-inclusion of adjustment means that allow controlling the starting, power adjustment, and stopping of the motors.

### DESCRIPTION OF THE INVENTION

The motor proposed by the invention fills the technical gap set forth above based on a highly effective solution.

To that end and more specifically, the invention is formed by two discs of paramagnetic material which are arranged parallel to one another, on which a plurality of permanent magnets are distributed along the perimeter and in an equiangular manner, with a certain inclination. Therefore, one of the discs of the magnetic axial flux motor of the invention is intended to form the stator of the motor, while the other disc forms the rotor thereof, being consequently associated with the corresponding output shaft. It should be noted that the particular feature of the invention lies in the fact that the poles of the magnets are always arranged with the same magnetic orientation, in which the same pole (either north or south) is always facing the stator if it is integrated in the rotor, or vice versa. In this way, the angles formed by the magnets of both parts are identical so as to achieve a maximum repulsion force and to define a tangential component which causes the movement of the disc of the rotor, as a result of said inclination between the permanent magnets.

Therefore, the present invention is defined according to the set of claims that accompanies the present specification. In this way, it should be noted that the rotor and the stator are each formed by a disc, with the shaft of the rotor traversing the stator, such that a plurality of permanent magnets are distributed on the surface of the opposing faces between both discs in a complementary inclined arrangement, such that a repulsion force is generated between the magnets which, due to the relative inclination with respect to the rotor and stator, generates a tangential force component with respect to said rotor, with the motor being envisaged to include adjustment means for adjusting the separation between the two discs forming the rotor and the stator.

According to another essential feature of the invention, it has been envisaged to include a specific mechanism for starting the motor, keeping it in operation, and possibly stopping it, and furthermore this mechanism can be autonomous, i.e., capable of changing the motor torque based on needs, or manual, i.e., the torque thereof can be adjusted also based on needs.

More specifically, the mechanism for putting the motor in operation and adjusting its power consists of an adjustment mechanism for adjusting the proximity of the two discs forming the rotor and the stator.

To that end, the shaft of the rotor will traverse a hole made in the disc forming the stator, being able to move closer to and away from same, such that it is linked to said stator through an abutment mechanism about which said shaft can freely rotate, but linked to same axially, such that the axial movement of said abutment mechanism causes the same axial movement of the shaft of the rotor.

This abutment mechanism has threaded holes which are traversed by worm screws linked to the body of the stator, such that the distance between the rotor and the stator can be adjusted by means of an actuation mechanism for said worm screws.

In this way, in a stopped or inoperative situation, the disc of the rotor will be sufficiently separated from the disc of the stator such that the magnetic repulsion of the magnets of both elements is insufficient to move the rotor. Meanwhile, in order to start said motor, it will be sufficient to actuate the worm screws which will gradually move the disc of the rotor closer to the disc of the stator, thereby achieving a smooth and gradual starting until reaching the maximum repulsion point, and accordingly the maximum power of the motor, with the stopping maneuver being the reverse of the maneuver that has just been described.

The actuation of the worm screws can be managed manually or automatically, without affecting the essence of the invention.

In this way, a perfectly adjustable motor in terms of putting it into operation, controlling its power, and stopping it, is achieved; said motor being readily scalable to different powers and requiring no more energy consumption that is necessary to move the discs of the rotor and the stator closer to and away from one another.

### DESCRIPTION OF THE DRAWINGS

To complement the description that is made below and in order to help better understand the features of the invention according to a preferred practical embodiment thereof, a set of drawings is attached as an integral part of said description in which the following is depicted in an illustrative and non-limiting manner:
Figure 1 shows a profile view of a magnetic axial flux motor comprising permanent magnets made according to the object of the present invention in a situation in which the motor is inoperative or stopped.
Figure 2 shows a view similar to that of Figure 1, but in which the motor is an operative situation.
Figure 3 shows an inner plan view of the distribution of the magnets in the disc of the rotor, which distribution is reproduced complementarily in the disc of the stator.

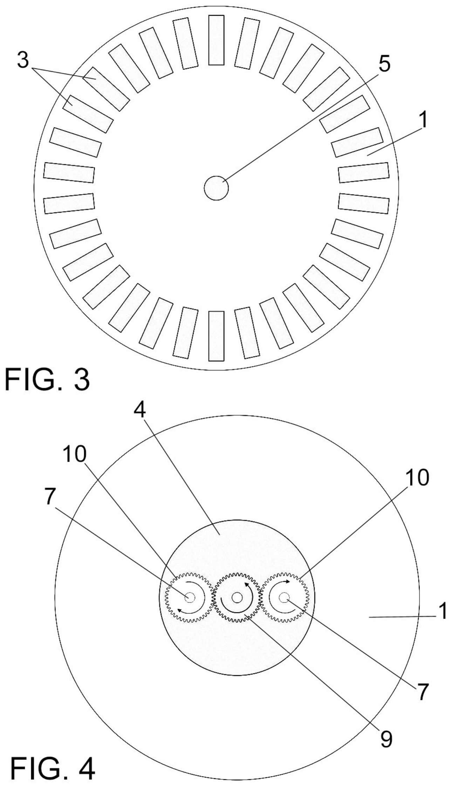

Finally, Figure 4 shows an outer plan view of the motor, at the level of the adjustment mechanism for adjusting the separation between the discs of the rotor and the stator.

### PREFERRED EMBODIMENT OF THE INVENTION

In view of the mentioned figures, the motor of the invention is formed by a pair of discs of paramagnetic material, forming the rotor (1) and the stator (2), the discs have the same diameter and are arranged opposite one another in a parallel manner through their centers, the stator (2) including a hole traversed by the output shaft (5) which is integral with the rotor through a fixing element (12), while the stator (2) will include bushings (6) which, as will be seen below, allow not only the rotation of the output shaft (5) therein, but also its axial movement.

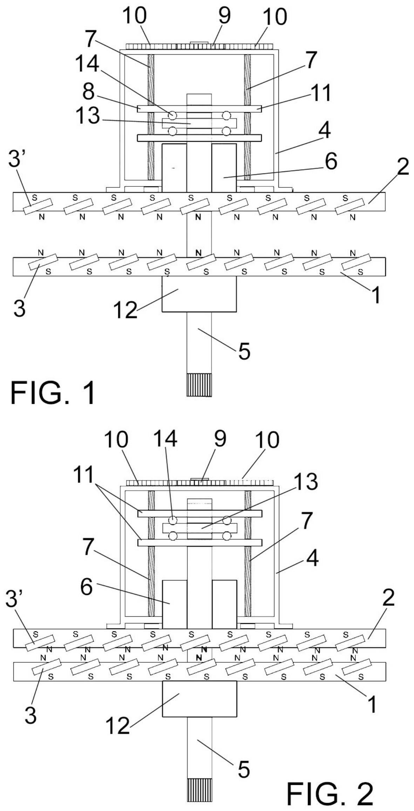

According to Figures 1 to 3, on the perimeter edge of each of the discs forming the rotor (1) and the stator (2), as well as, optionally, on the intermediate surface thereof (not depicted in the figures), a plurality of permanent magnets [(3), (3')] are distributed along the perimeter and in a equiangular manner, with a certain inclination, such that the poles of the magnets are always arranged with the same magnetic orientation, in which the same pole (either north or south) is always facing the stator if it is integrated in the rotor and vice versa, with the angles formed by the magnets of both parts being identical so as to achieve a maximum repulsion force and to define a tangential component which causes the movement of the disc of the rotor, as a result of said inclination between the permanent magnets.

As mentioned above, controlling the separation between the discs forming the rotor (1) and the stator (2) is sufficient to control the starting, rotational speed, and stopping of the magnetic axial flux motor.

To that end, the end which is opposite the operative end of the output shaft (5) of the rotor and traverses the stator (2) ends in an abutment mechanism, including a perimeter flange (13) integral with the shaft, which is linked to axial bearings (14) established between a pair of flats (11) which determine the abutment mechanism, which flats (11) include threaded holes on their perimeter edge which are traversed by worm screws (7) the end of which is integral with a pinion (10) that meshes with a central gear (9) the actuation of which causes the worm screws (7) to rotate in a synchronized manner, and accordingly causes one disc to move closer to or away from the other disc, with this mechanism being partially covered by a protective casing (4), such that the pinions (10) and the central gear (9) are the only elements external to this protective casing (4) integral with the stator, as shown in Figure 4.

Based on this structuring, and as described above, by acting on the central gear (9) in one direction or another, either in a manual mechanical manner or an automated mechanical manner, the discs carrying the permanent magnets can be adjusted to move closer to or away from one another, and therefore the tangential force component generated in the rotor as a result of the relative position between said magnets can be controlled, so as to enable starting the motor smoothly and gradually, as well as speeding it up to the maximum power offered by said motor, which will correspond with the maximum closeness limit expected for said discs, as well as slowing it down or stopping it permanently, based on the degree of separation between the discs.

## Claims

1. A magnetic axial flux motor comprising permanent magnets, being of the type that is made up of a rotor (1) integral with an output shaft (5) and a stator (2), both obtained from diamagnetic materials, and including permanent magnets [(3), (3')] oriented with opposite polarizations, **characterized in that** the rotor (1) and the stator (2) are each formed by a disc, with the shaft of the rotor (1) traversing the stator (2), such that a plurality of permanent magnets [(3), (3')] are distributed on the surface of the opposing faces between both discs in a complementary inclined arrangement, such that a repulsion force is generated between the magnets which, due to the relative inclination with respect to the rotor (1) and stator (2), generates a tangential force component with respect to said rotor (1), with the motor being envisaged to include adjustment means for adjusting the separation between the two discs forming the rotor (1) and the stator (2).

2. The magnetic axial flux motor comprising permanent magnets according to claim 1, **characterized in that** the stator (2) includes a hole traversed by the output shaft (5) which is integral with the rotor through a fixing element (12), while the stator (2) includes bushings (6) allowing the rotation of the output shaft (5) therein, as well as the axial movement thereof.

3. The magnetic axial flux motor comprising permanent magnets according to claim 1, **characterized in that** the adjustment means for adjusting the separation between the two discs forming the rotor (1) and the stator (2) are implemented as a perimeter flange (13) which is integral with the shaft of the rotor (1), which is linked to axial bearings (14) established between a pair of flats (11) which determine an abutment mechanism inside a protective casing (4) integral with the stator (2); which flats (11) include threaded holes on their perimeter edge which are traversed by worm screws (7) the end of which is integral with a pinion (10) that meshes with a central gear (9) the actuation of which causes the worm screws (7) to rotate in a synchronized manner, and accordingly causes one disc to move closer to or away from the other disc.

4. The magnetic axial flux motor comprising permanent magnets according to claims 1 and 3, **characterized in that** the adjustment means for adjusting the separation between the two discs forming the rotor (1) and the stator (2) include manual mechanical actuation means.

5. The magnetic axial flux motor comprising permanent magnets according to claims 1 and 3, **characterized in that** the adjustment means for adjusting the separation between the two discs forming the rotor (1) and the stator (2) include automated mechanical actuation means.
